# EUROPEAN PATENT APPLICATION

(11) **EP 4 671 913 A1**
(43) Date of publication of application: **31.12.2025**
(21) Application number: 25172270.8
(22) Date of filing: 24.04.2025
(51) Int. Cl.: G06F 1/16

(54) **DISPLAY DEVICE AND METHOD FOR FABRICATING DISPLAY DEVICE**

(30) Priority: 25.06.2024 KR 20240082588; 21.08.2024 KR 20240111755
(71) Applicant: Samsung Display Co., Ltd., Yongin-si, Gyeonggi-do 17113 (KR)
(72) Inventor: PARK, Min Hee, 17113 Yongin-si (KR); ONOUE, Shinya, 17113 Yongin-si (KR); KIM, Moon Kon, 17113 Yongin-si (KR); KIM, Hee Chang, 17113 Yongin-si (KR); MUN, Eun Joong, 17113 Yongin-si (KR); PARK, Jong Deok, 17113 Yongin-si (KR)
(74) Representative: Walaski, Jan Filip

(57) **Abstract**

A display device include a display module and an outer structure surrounding the display module. The display module includes: a display panel having a folding area and a non-folding area at a side of the folding area; an upper module on an upper side of the display panel; and a lower module on a lower side of the display panel. The outer structure includes: a first outer layer adjacent to the display module; and a second outer layer on an outer side of the first outer layer. A Young's modulus of the first outer layer is different than a Young's modulus of the second outer layer.

## Description

### CROSS-REFERENCE TO RELATED APPLICATION

The present application claims priority to Korean Patent Application No. 10-2024-0082588, filed on 25 June 2024 in the Korean Intellectual Property Office and Korean Patent Application No. 10-2024-0111755, filed on 21 August 2024 in the Korean Intellectual Property Office.

### BACKGROUND

### 1. Field

The disclosure relates to a display device and a method for fabricating the same.

### 2. Description of the Related Art

As the information society evolves, various demands for display devices are ever increasing. A display device may be a flat-panel display device, such as a liquid-crystal display device, a field emission display device, and a light-emitting display device. Light-emitting display devices may include an organic light-emitting display device including organic light-emitting emitting diodes as light-emitting elements or an inorganic light-emitting diode display device including inorganic light-emitting diodes, such as light-emitting diodes (LEDs), as light-emitting elements.

Recently, to increase portability of the display device and provide a wider display screen, a bendable display device in which the display area can be bent or a foldable display device in which the display area can be folded have been developed.

Because the cost and difficulty of the process of fabricating display devices increases with advancement of the technology, there is a trend that a variety of parts of display devices are made as modules and then are assembled together.

### SUMMARY

Embodiments of the present disclosure provide a display device that reduces dead space between modules and a method for fabricating the same.

Embodiments of the present disclosure also provide a display device exhibiting improved durability and a method for fabricating the same.

It should be noted that aspects and features of the present disclosure are not limited to the above-mentioned aspects and features; and other aspects and features of the present disclosure will be apparent to those skilled in the art from the following descriptions.

According to an embodiment of the present disclosure, a display device including a display module and an outer structure surrounding the display module. The display module includes a display panel having a folding area and a non-folding area at a side of the folding area, an upper module on an upper side of the display panel, and a lower module on a lower side of the display panel. The outer structure includes a first outer layer adjacent to the display module and a second outer layer on an outer side of the first outer layer. A Young's modulus of the first outer layer is different than a Young's modulus of the second outer layer.

In an embodiment, in the Young's modulus of the first outer layer is smaller than the Young's modulus of the second outer layer.

In an embodiment, the Young's modulus of the first outer layer is equal to or less than 100 MPa at -20°C.

In an embodiment, the Young's modulus of the first outer layer is equal to or greater than 100 MPa at 20°C.

In an embodiment, the outer structure includes a resin.

In an embodiment, the outer structure is in the non-folding area and is not in the folding area.

In an embodiment, the first outer layer includes a first sub-outer layer and a second sub-outer layer spaced apart from the first sub-outer layer with the folding area therebetween, and the second outer layer includes a third sub-outer layer and a fourth sub-outer layer spaced apart from the third sub-outer layer with the folding area therebetween.

In an embodiment, the first outer layer is in contact with a side surface of the display module.

In an embodiment, the display panel has a bending area, and the first outer layer is not in the bending area on a lower surface of the display panel.

In an embodiment, the display device may further include a cover window on the display module, and the cover window is on the second outer layer.

In an embodiment, the display device may further include a housing surrounding the display module and the outer structure, and the outer structure is between the display module and the housing.

In an embodiment, the display device may further include a cover window on the display module, and a lower surface of the cover window is in contact with an upper surface of the display module.

In an embodiment, the outer structure is not on the upper surface of the display module.

In an embodiment, the outer structure further includes a removal mark on the first outer layer or the second outer layer.

In an embodiment, the removal mark has a protruding or recessed shape from an upper surface of the first outer layer or an upper surface of the second outer layer.

According to an embodiment of the present disclosure, a display device includes a display panel having a folding area and an outer structure surrounding the display panel and including a resin. The outer structure includes a first outer layer adjacent to the display panel and a second outer layer on an outer side of the first outer layer. A Young's modulus of the first outer layer is smaller than a Young's modulus of the second outer layer.

In an embodiment, the outer structure is not in the folding area.

According to an embodiment of the present disclosure, a method for fabricating a display device includes: combining a first mold with a display module; injecting a first paste through a first inlet and cutting it to form a first outer layer; disassembling the first mold and removing a first tip of the first outer layer; combining a second mold with the display module having the first outer layer formed thereon; injecting a second paste through a second inlet and curing it to form a second outer layer, and disassembling the second mold and removing a second tip of the second outer layer.

In an embodiment, a type or content ratio of a composition of the second paste is different from a type or content ratio of a composition of the first paste.

In an embodiment, the second paste further includes at least one of a filler, an additive, and a curing agent or has a larger amount of a component than the first paste.

According to embodiments of the present disclosure, dead space between modules in a display device can be reduced.

According to embodiments of the present disclosure, the durability of a display device can be improved.

It should be noted that aspects and features of the present disclosure are not limited to those described above and other aspects and features of the present disclosure will be apparent to those skilled in the art from the following descriptions.

### BRIEF DESCRIPTION OF THE DRAWINGS

The above and other aspects and features of the present disclosure will become more apparent by describing, in detail, embodiments thereof with reference to the attached drawings, in which:
FIG. 1 is a perspective view of a display device in an unfolded state.
FIG. 2 is a perspective view of the display device shown in FIG. 1 in a folded state.
FIG. 3 is a perspective view of a display device according to another implementation in an unfolded state.
FIG. 4 is a perspective view of the display device shown in FIG. 3 in a folded state.
FIG. 5 is an exploded, perspective view of a display device.
FIG. 6 is a cross-sectional view taken along the line X1 - X1' in FIG. 5.
FIG. 7 is a cross-sectional view of a display panel.
FIG. 8 is a view of a rear side of a display device.
FIG. 9 is a cross-sectional view of the display device shown in FIG. 8 taken along line the X2 - X2' in FIG. 8.
FIG. 10 is a cross-sectional view of a display device taken along the line X2 - X2' in FIG. 8.
FIG. 11 is an image showing a gate residue mark of a display device.
FIG. 12 is a cross-sectional view of a display device according to another implementation.
FIG. 13 is a cross-sectional view of a display device according to another implementation.
FIG. 14 is a cross-sectional view of a display device according to another implementation.
FIG. 15 is a flowchart describing steps of a method of fabricating a display device.
FIG. 16 is a flowchart describing step S100 in FIG. 15.
FIG. 17 is a flowchart describing step S200 in FIG. 15.
FIG. 18 is a cross-sectional view illustrating steps S110 and S120 in FIG. 16.
FIG. 19 is a cross-sectional view illustrating step S130 in FIG. 16.
FIG. 20 is a cross-sectional view illustrating steps S220 and S220 in FIG. 17.
FIG. 21 is a cross-sectional view illustrating step S230 in FIG. 17.

### DETAILED DESCRIPTION

The present disclosure will now be described more fully hereinafter with reference to the accompanying drawings, in which embodiments are shown. The present disclosure may, however, be embodied in different forms and should not be construed as limited to the embodiments set forth herein. Rather, these embodiments are provided so that this disclosure will be thorough and complete and will convey the full scope of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

Hereinafter, embodiments of the present disclosure will be described, in detail, with reference to the accompanying drawings.

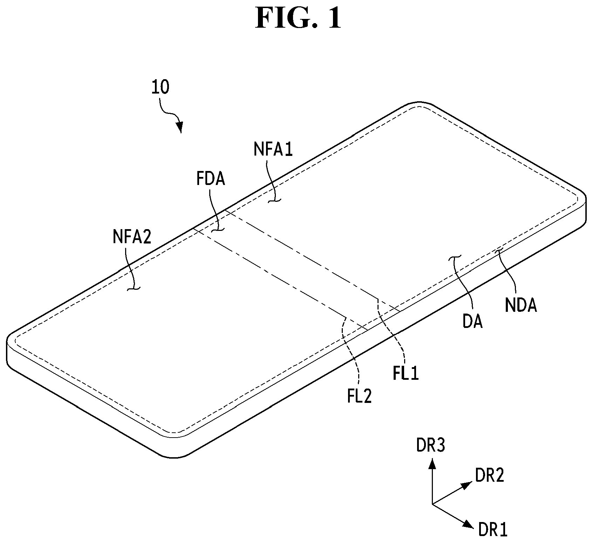

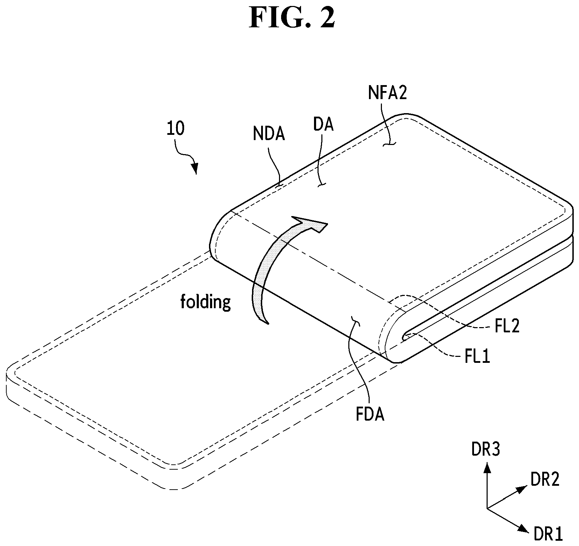

FIG. 1 is a perspective view of a display device in an unfolded state, and FIG. 2 is a perspective view of the display device shown in FIG. 1 in a folded state.

Referring to FIGS. 1 and 2, a display device 10may be a foldable display device. As shown in the drawings, the display device 10 is illustrated as part of a smartphone, but it is not limited thereto. For example, the display device 10 may be applied to a mobile phone, a tablet PC, a personal digital assistant (PDA), a portable multimedia player (PMP), a television set, a game machine, a wristwatch-type electronic device, a head-mounted display, a personal computer monitor, a laptop computer, a car navigation system, a car instrument cluster, a digital camera, a camcorder, an outdoor billboard, an electronic billboard, various medical apparatuses, various home appliances, such as a refrigerator and a laundry machine, Internet of Things (IoT) devices, etc., in addition to a smart phone.

The display device 10 may be variously classified by the way in which images are displayed. Examples of the classification of display devices include an organic light-emitting diode display device (OLED), an inorganic light-emitting (inorganic EL) display device, a quantum-dot light-emitting display device (QED), a micro LED display device, a nano LED display device, a field emission display device (FED), an electrophoretic display device (EPD), etc. In the following description, the display device is embodied as an organic light-emitting display device as an example, and the organic light-emitting display device will be simply referred to as a display device unless it is necessary to discern it from others. It is, however, to be understood that embodiments are not limited to the organic light-emitting display device, and one of the above-listed display devices or any other display device well known in the art may be employed without departing from the scope of the present disclosure.

In the drawings, the first direction DR1 may refer to a direction parallel to a side of the display device 10, for example, the horizontal direction of the display device 10 when viewed from the top. A second direction DR2 may refer to a direction parallel to another side of the display device 10 that meets (e.g., contacts or extends from) the side of the display device 10, for example, the vertical direction of the display device 10 when viewed from the top. A third direction DR3 may refer to the thickness direction of the display device 10.

The display device 10 may have a rectangular shape or a square shape when viewed from the top. It should be understood, however, that the shape is not limited thereto. The display device 10 may have a rectangular shape with sharp corners or a rectangular shape with rounded corners when viewed from the top. The display device 10 may have two shorter sides extending in the first direction DR1 and two longer sides extending in the second direction DR2 when viewed from the top.

The display device 10 has a display area DA and a non-display area NDA. The shape of the display area DA may conform to (or may correspond to) the shape of the display device 10 when viewed from the top. For example, when the display device 10 is rectangular when viewed from the top, the display area DA may also be rectangular.

The display area DA may include a plurality of pixels to display images. The plurality of pixels may be arranged in a matrix pattern. Each of the plurality of pixels may have, but is not limited to, a rectangle, a diamond, or a square shape when viewed from the top. For example, the plurality of pixels may be a quadrangle other than a rectangle, a diamond or a rectangle, a polygon other than a quadrangle, a circle, or an ellipse when viewed from the top.

The non-display area NDA may not include pixels and, thus, may not display images. The non-display area NDA may be disposed around the display area DA. The non-display area NDA may be disposed to surround (e.g., to extend around a periphery of) the display area DA as shown in, for example, FIGS. 1 and 2, but it is not limited thereto. The display area DA may be partially surrounded by the non-display area NDA.

The display device 10 may be folded as well as unfolded. The display device 10 may be folded inwardly (in an in-folding manner) so that the display device DA is located inside as shown in, for example, FIG. 2. When the display device 10 is folded in the in-folding manner, a part of the front surface of the display device 10 may face another part of the front surface. Alternatively, the display device 10 may be folded outwardly (in an out-folding manner) so that the display area DA is located outside. When the display device 10 is folded in the out-folding manner, a part of the rear surface of the display device 10 may face another part of the rear surface.

The display device 10 may have a folding area FDA, a first non-folding area NFA1, and a second non-folding area NFA2. The display device 10 can be bent or folded at the folding area FDA and cannot be bent or folded at the first non-folding area NFA1 and the second non-folding area NFA2.

The first non-folding area NFA1 may be disposed on one side, for example, the upper side of the folding area FDA. The second non-folding area NFA2 may be disposed on the other side, for example, the lower side of the folding area FDA. The folding area FDA may be defined by the first folding line FL1 and the second folding line FL2 and may be bent to have a curvature (e.g., a predetermined curvature). The first folding line FL1 may be the boundary between the folding area FDA and the first non-folding area NFA1, and the second folding line FL2 may be the boundary between the folding area FDA and the second non-folding area NFA2.

As shown in FIGS. 1 and 2, the first folding line FL1 and the second folding line FL2 may extend in the first direction DR1, and the display device 10 may be folded in the second direction DR2. Accordingly, the length of the display device 10 in the second direction DR2 may be reduced to about half so that the display device 10 is easier to carry.

When the first folding line FL1 and the second folding line FL2 extend in the first direction DR1 as shown in FIGS. 1 and 2, the length of the folding area FDA in the second direction DR2 may be smaller than the length in the first direction DR1. In addition, the length of the first non-folding area NFA1 in the second direction DR2 may be larger than the length of the first non-folding area NFA1 in the first direction DR1. The length of the second non-folding area NFA2 in the second direction DR2 may be larger than the length of the second non-folding area NFA2 in the first direction DR1.

Each of the display area DA and the non-display area NDA may overlap at least one of the folding area FDA, the first non-folding area NFA1, and the second non-folding area NFA2. In FIGS. 1 and 2, each of the display area DA and the non-display area NDA overlaps the folding area FDA, the first non-folding area NFA1 and the second non-folding area NFA2.

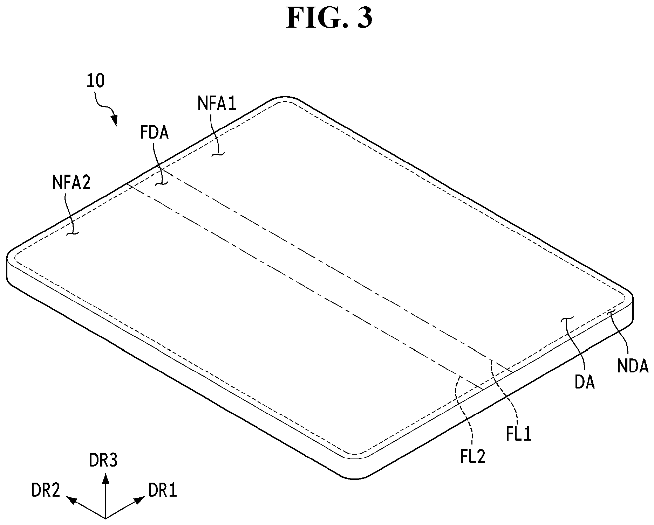

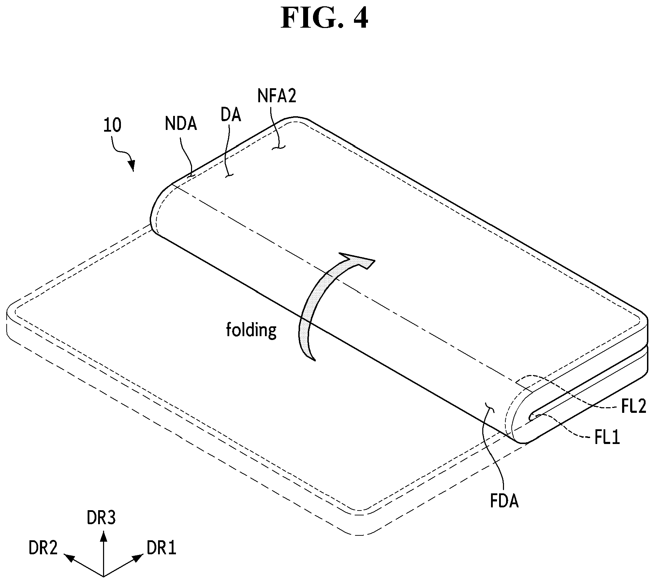

FIG. 3 is a perspective view of a display device according to another example in an unfolded state, and FIG. 4 is a perspective view of the display device shown in FIG. 3 in a folded state.

The example shown in FIGS. 3 and 4 is substantially identical to the example shown in FIGS. 1 and 2 except that a first folding line FL1 and a second folding line FL2 extend in the second direction DR2 and the display device 10 is folded in the first direction DR1 so that the length of the display device 10 in the first direction DR1 is reduced by approximately half. Therefore, the elements of the example shown in FIGS. 3 and 4 identical to those described above with reference to FIGS. 1 and 2 will not be described again or will be only briefly described.

Referring to FIGS. 3 and 4, when the display device 10 is unfolded, the longer sides of the display device 10 may extend in the second direction DR2 and the shorter sides of the display device 10 may extend in the first direction DR1.

The first folding line FL1 and the second folding line FL2 extend in the second direction DR2 as shown in FIGS. 3 and 4, and the display device 10 may be folded along the first direction DR1.

The first non-folding area NFA1 may be disposed on one side, for example, the right side of the folding area FDA. The second non-folding area NFA2 may be disposed on the opposite side, for example, the left side of the folding area FDA.

When the first folding line FL1 and the second folding line FL2 extend in the second direction DR2 as shown in FIGS. 3 and 4, the length of the folding area FDA in the first direction DR1 may be smaller than the length in the second direction DR2. In addition, the length of the first non-folding area NFA1 in the second direction DR2 may be larger than the length of the first non-folding area NFA1 in the first direction DR1. The length of the second non-folding area NFA2 in the second direction DR2 may be larger than the length of the second non-folding area NFA2 in the first direction DR1.

In the following description, the example shown in FIGS. 1 and 2 is described as an example for convenience of illustration. The following description can be equally applied to both the embodiments shown in FIGS. 1 and 2 and in FIGS. 3 and 4.

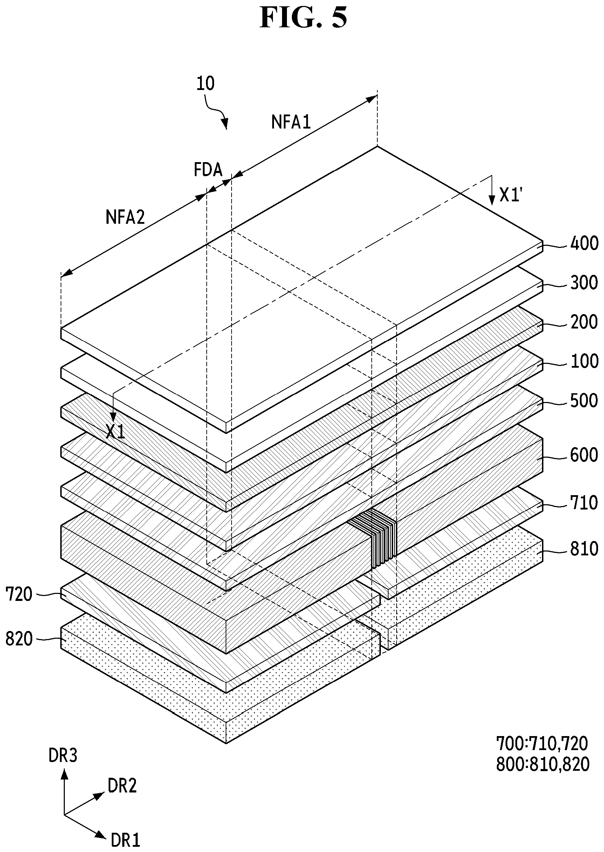

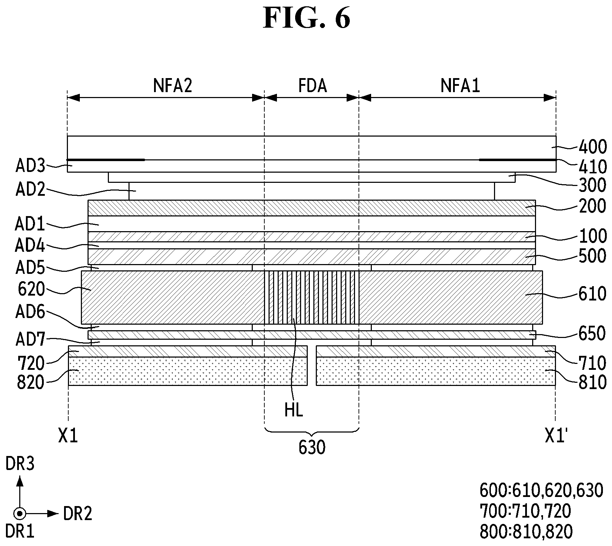

FIG. 5 is an exploded, perspective view of a display device, and FIG. 6 is a cross-sectional view taken along the line X1 - X1' in FIG. 5.

Referring to FIGS. 5 and 6, a display device 10 may include a display panel 100, an upper module disposed above the display panel 100, and a lower module disposed below the display panel 100. Each of the upper and lower module may comprise a plurality of functional layers having different functions. For example, the upper module may include a polarizing film 200, a window 300, and a protective film 400. The lower module may include a panel bottom member 500, a panel support member 600, a heat dissipation member 700, and a digitizer 800.

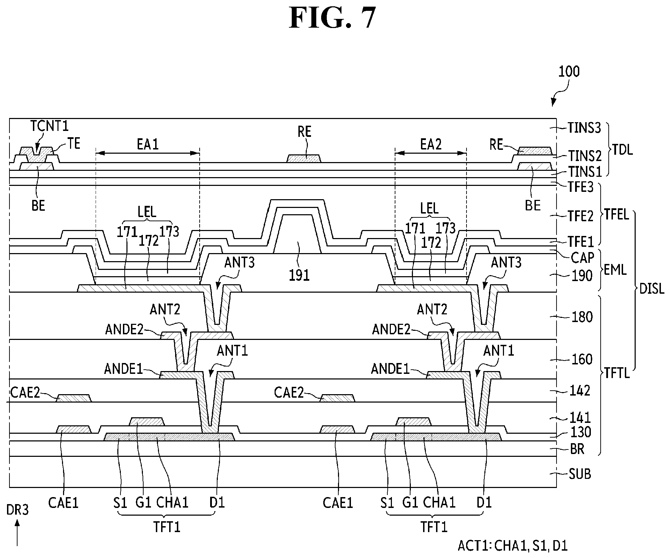

The display panel 100 will be described in more detail with reference to FIG. 7.

The polarizing film 200 may be disposed on the front surface of the display panel 100. The front surface of the display panel 100 may be a display surface at where images are displayed. The polarizing film 200 may be attached to the front surface of the display panel 100 by a first adhesive member AD1. The first adhesive member 910 may be an optically clear adhesive (OCA) film or an optically clear resin (OCR). The polarizing film 200 may include a linear polarizer and a retardation film such as a λ/4 (quarter-wave) plate.

The window 300 may be disposed on the front surface of the polarizing film 200. The window 300 may be attached to the front surface of the polarizing film 200 by a second adhesive member AD2. The second adhesive member AD2 may be a transparent adhesive film or a transparent adhesive resin. The window 300 may be made of a transparent material and may include, for example, glass or plastic. For example, the window 300 may be, but is not limited to, an ultra-thin glass (UTG) having a thickness of about 0.1 mm or less or a transparent polyimide film.

The protective film 400 may be disposed on the front surface of the window 300. The protective film 400 may be attached to the front surface of the window 300 by a third adhesive member AD3. The third adhesive member AD3 may be a transparent adhesive film or a transparent adhesive resin. The protective film 400 may provide an anti-scattering function when the cover window is broken, shock absorption, anti-scratch, anti-fingerprint, and/or anti-glare.

A light-blocking layer 410 may be disposed on the rear surface of the protective film 400. The light-blocking layer 410 may be disposed on the edge of the protective film 400. The light-blocking layer 410 may include a material that can block light. For example, the light-blocking layer 410 may include an inorganic black pigment, such as carbon black or an organic black pigment.

The panel bottom member 500 may be disposed on the rear surface of the display panel 100. The panel bottom member 500 may be attached to the rear surface of the display panel 100 by a fourth adhesive member AD4. The fourth adhesive member AD4 may be a pressure sensitive adhesive (PSA).

The panel bottom member 500 may be a buffer layer for absorbing external impact. The panel bottom member 500 absorbs an external impact to prevent the display panel 100 from being damaged. The panel bottom member 500 may be made of a single layer or multiple layers. For example, the buffer layer may include an elastic material, such as a rubber and a sponge formed by foaming a urethane-based material or an acrylic-based material.

Although the panel bottom member 500 is illustrated as being disposed in the folding area FDA in FIGS. 5 and 6, it is not limited thereto. For example, the panel bottom member 500 may be removed from the folding area FDA so that the display device 10 can be folded more smoothly.

The panel support member 600 may be disposed on the rear surface of the panel bottom member 500. The panel support member 600 may be a rigid member that does not easily change shape or volume due to external pressure. The panel support member 600 is disposed on the rear surface of the display panel 100 and is a rigid member that does not easily change its shape or volume due to external pressure, and thus it can support the display panel 100.

The panel support member 600 may be a metal plate. For example, the panel support member 600 may be made of metal or metal alloy. The panel support member 600 may include, but is not limited to, copper (Cu), aluminum (Al), stainless steel (SUS), and/or an alloy thereof.

The panel support member 600 may be a polymer including carbon fiber or glass fiber. Where the panel support member 600 is formed of a polymer including carbon fiber or glass fiber, electromagnetic signals of a digitizer member in the display device 10 can pass through.

For example, the panel support member 600 may have a structure in which a number of prepreg materials are stacked on one another. The panel support member 600 may have a structure in which first prepreg materials parallel to the folding lines FL1 and FL2 (see, e.g., FIG. 1) and second prepreg materials perpendicular to the folding lines FL1 and FL2 are alternately stacked on one another. The first prepreg materials and the second prepreg materials may be stacked on one another by a hot-press or an autoclave. The term "prepreg" refers to a reinforced material (or a reinforced fabric) pre-impregnated with a resin.

The panel support member 600 may be attached to the rear surface of the panel bottom member 500 by fifth adhesive members AD5. The fifth adhesive members AD5 may not be disposed in the folding area FDA to reduce the folding stress of the display device 10. One of the fifth adhesive members AD5 may be disposed in the first non-folding area NFA1, and another one of the fifth adhesive members AD5 may be disposed in the second non-folding area NFA2. The fifth adhesive members AD5 may be pressure sensitive adhesives, but are not limited thereto.

A buffer member 650 may be disposed on the rear surface of the panel support member 600. The buffer member 650 may be attached to the rear surface of the panel support member 600 by sixth adhesive members AD6. The sixth adhesive members AD6 may not be disposed in the folding area FDA to reduce the folding stress of the display device 10. For example, one of the sixth adhesive members AD6 may be disposed in the first non-folding area NFA1, and another one of the sixth adhesive members AD6 may be disposed in the second non-folding area NFA2. The sixth adhesive members AD6 may be pressure sensitive adhesives.

The buffer member 650 absorbs an external impact to prevent the display panel 100 and the panel support member 600 from being damaged. The buffer member 650 may include an elastic material, such as a rubber and a sponge formed by foaming a urethane-based material or an acrylic-based material.

The heat dissipation member 700 may include a first heat dissipation member 710 and a second heat dissipation member 720. The first heat dissipation member 710 and the second heat dissipation member 720 may be disposed on the rear surface of the buffer member 650. The first heat dissipation member 710 and the second heat dissipation member 720 may be attached to the rear surface of the buffer member 650 by seventh adhesive members AD7. The seventh adhesive members AD7 may be pressure sensitive adhesives.

The first heat dissipation member 710, the second heat dissipation member 720, and the seventh adhesive members AD7 may not be disposed in the folding area FDA to reduce the folding stress of the display device 10. The first heat dissipation member 710 may be disposed in the first non-folding area NFR1, and the second heat dissipation member 720 may be disposed in the second non-folding area NFR2. A gap between the first heat dissipation member 710 and the second heat dissipation member 720 may overlap the folding area FDA and may be smaller than the width of the folding area FDA, but the arrangement is not limited thereto.

The first heat dissipation member 710 and the second heat dissipation member 720 may be metal films, such as copper, nickel, ferrite, and silver, which have excellent thermal conductivity. Accordingly, heat generated by the display device 10 can be released to the outside by the first heat dissipation member 710 and the second heat dissipation member 720.

The digitizer 800 may include a first digitizer 810 and a second digitizer 820 (or a first digitizer layer and a second digitizer layer). The first digitizer 810 and the second digitizer 820 may be disposed on the rear surface of the heat dissipation member 700.

The first digitizer 810 and the second digitizer 820 may not be disposed in the folding area FDA to reduce folding stress of the display device 10. For example, the first digitizer 810 may be disposed in the first non-folding area NFA1, and the second digitizer 820 may be disposed in the second non-folding area NFA2. A gap between the first digitizer 810 and the second digitizer 820 may overlap with the folding area FDA and may be smaller than the width of the folding area FDA.

The digitizer 800 may include electrode patterns for sensing proximity or contact of an electronic pen, such as a stylus pen supporting an electromagnetic resonance (EMR) technology. For example, the digitizer 800 may detect a magnetic field or an electromagnetic signal emitted from the electronic pen based on the electrode patterns and may determine touch coordinates of the point at where the detected magnetic field or electromagnetic signal is largest.

FIG. 7 is a cross-sectional view of a display panel.

Referring to FIG. 7, the display panel 100 may include a substrate SUB, a display layer DISL, and a touch sensing layer TDL. The display layer DISL may include a thin-film transistor layer TFTL, an emission material layer EML, and an encapsulation layer TFEL.

The substrate SUB may be made of an insulating material, such as a polymer resin. For example, the substrate SUB may be made of polyimide. The substrate SUB may be a flexible substrate that can be bent, folded, or rolled.

The thin-film transistor layer TFTL may be disposed on the substrate SUB. The thin-film transistor layer TFTL may include a barrier layer BR, a thin-film transistor TFT1, a first capacitor electrode CAE1, a second capacitor electrode CAE2, a first anode connection electrode ANDE1, a second anode connection electrode ANDE2, a gate insulator 130, a first interlayer dielectric film 141, a second interlayer dielectric film 142, a first planarization film 160, a second planarization film 180.

The barrier film BR may be disposed on the substrate SUB. The barrier film BR is a film for protecting the thin-film transistors of the thin-film transistor layer TFTL and an emissive layer 172 of the emission material layer EML. The barrier film BR may include multiple inorganic films alternately stacked on one another. For example, the barrier film BR may be made of multiple layers in which one or more inorganic layers of a silicon nitride layer, a silicon oxynitride layer, a silicon oxide layer, a titanium oxide layer, and an aluminum oxide layer are alternately stacked on one another.

The thin-film transistors TFT1 may be disposed on the barrier film BR. An active layer ACT1 of the thin-film transistor TFT1 may be disposed on the barrier layer BR. The active layer ACT1 of the thin-film transistor TFT1 may include polycrystalline silicon, monocrystalline silicon, low-temperature polycrystalline silicon, amorphous silicon, or an oxide semiconductor.

The active layer ACT1 may have a channel region CHA1, a source region S1 and a drain region D1. The channel region CHA1 may overlap with a gate electrode G1 in the third direction DR3, that is, the thickness direction of the substrate SUB. The source region S1 may be disposed on one side of the channel region CHA1, and the drain region D1 may be disposed on the opposite side of the channel region CHA1. The source region S1 and the drain region D1 may not overlap with the gate electrode G1 in the third direction DR3. The source region S1 and the drain region D1 may be formed by doping a silicon semiconductor or an oxide semiconductor with ions or impurities to have conductivity.

The gate insulator 130 may be disposed on the active layer ACT1 of the thin-film transistor TFT1. The gate insulator 130 may be formed of an inorganic layer, for example, a silicon nitride layer, a silicon oxynitride layer, a silicon oxide layer, a titanium oxide layer, or an aluminum oxide layer.

The gate electrode G1 and the first capacitor electrode CAE1 of the thin-film transistor TFT1 may be disposed on the gate insulator 130. The gate electrode G1 may overlap with the active layer ACT1 in the third direction DR3. Although the gate electrode G1 and the first capacitor electrode CAE1 are spaced apart from each other in FIG. 7, the gate electrode G1 and the first capacitor electrode CAE1 may be connected with each other as a single piece. The gate electrode G1 and the first capacitor electrode CAE1 may be made of a single layer or multiple layers of one of molybdenum (Mo), aluminum (Al), chromium (Cr), gold (Au), titanium (Ti), nickel (Ni), neodymium (Nd), and copper (Cu) or an alloy thereof.

The first interlayer dielectric film 141 may be disposed on the gate electrode G1 of the thin-film transistor TFT1 and the first capacitor electrode CAE1. The first interlayer dielectric film 141 may be formed of an inorganic layer, for example, a silicon nitride layer, a silicon oxynitride layer, a silicon oxide layer, a titanium oxide layer, or an aluminum oxide layer. The first interlayer dielectric film 141 may be made of a plurality of inorganic films.

The second capacitor electrode CAE2 may be disposed on the first interlayer dielectric film 141. The second capacitor electrode CAE2 may overlap the first capacitor electrode CAE1 of the thin-film transistor TFT1 in the third direction DR3. In addition, when the gate electrode G1 and the first capacitor electrode CAE1 are formed as a single piece, the second capacitor electrode CAE2 may overlap the gate electrode G1 in the third direction DR3. Because the first interlayer dielectric layer 141 has a reference (or predetermined) dielectric constant, a capacitor can be formed by the first capacitor electrode CAE1, the second capacitor electrode CAE2, and the first interlayer dielectric film 141 disposed therebetween. The second capacitor electrode CAE2 may be made of a single layer or multiple layers of one of molybdenum (Mo), aluminum (Al), chromium (Cr), gold (Au), titanium (Ti), nickel (Ni), neodymium (Nd), and copper (Cu) or an alloy thereof.

A second interlayer dielectric film 142 may be disposed over the second capacitor electrode CAE2. The second interlayer dielectric film 142 may be formed of an inorganic layer, for example, a silicon nitride layer, a silicon oxynitride layer, a silicon oxide layer, a titanium oxide layer, or an aluminum oxide layer. The second interlayer dielectric film 142 may be made of a plurality of inorganic films.

A first anode connection electrode ANDE1 may be disposed on the second interlayer dielectric film 142. The first anode connection electrode ANDE1 may be connected to the drain electrode D1 of the thin-film transistor TFT1 through a first connection contact hole (e.g., a first connection contact opening) ANT1 that penetrates (or extends through) the gate insulator 130, the first interlayer dielectric film 141 and the second interlayer dielectric film 142. The first anode connection electrode ANDE1 may be made of a single layer or multiple layers of one of molybdenum (Mo), aluminum (Al), chromium (Cr), gold (Au), titanium (Ti), nickel (Ni), neodymium (Nd), and copper (Cu) or an alloy thereof.

A first planarization film 160 may be disposed over the first anode connection electrode ANDE1 to provide a flat surface over level differences due to the thin-film transistor TFT1. The first planarization film 160 may be formed of an organic layer, such as an acryl resin, an epoxy resin, a phenolic resin, a polyamide resin, and a polyimide resin.

A second anode connection electrode ANDE2 may be disposed on the first planarization film 160. The second anode connection electrode ANDE2 may be connected to the first anode connection electrode ANDE1 through a second connection contact hole ANT2 penetrating the first planarization film 160. The second anode connection electrode ANDE2 may be made of a single layer or multiple layers of one of molybdenum (Mo), aluminum (Al), chromium (Cr), gold (Au), titanium (Ti), nickel (Ni), neodymium (Nd), and copper (Cu) or an alloy thereof.

A second planarization film 180 may be disposed on the second anode connection electrode ANDE2. The second planarization film 180 may be formed of an organic layer, such as an acryl resin, an epoxy resin, a phenolic resin, a polyamide resin, and a polyimide resin.

An emission material layer EML including light-emitting elements LEL and a bank 190 may be disposed on the second planarization film 180. Each of the light-emitting elements LEL includes a pixel electrode 171, an emissive layer 172, and a common electrode 173.

The pixel electrode 171 may be disposed on the second planarization film 180. The pixel electrode 171 may be connected to the second anode connection electrode ANDE2 through a third connection contact hole ANT3 penetrating the second planarization film 180.

In a top-emission structure in which light exits from the emissive layer 172 toward the common electrode 173, the pixel electrode 171 may be made of a metal material having a high reflectivity, such as a stack structure of aluminum and titanium (Ti / Al / Ti), a stack structure of aluminum (Al) and ITO (Indium Tin Oxide) (ITO / Al / ITO), an APC alloy and a stack structure of an APC alloy and ITO (ITO / APC / ITO). APC alloy is an alloy of silver (Ag), palladium (Pd) and copper (Cu).

The bank 190 may partition the pixel electrode 171 on the second planarization film 180 to define a first emission area EA1 and a second emission area EA2. The bank 190 may be disposed to cover the edges of the pixel electrode 171. The bank 190 may be formed of an organic film, such as an acryl resin, an epoxy resin, a phenolic resin, a polyamide resin, and a polyimide resin.

In each of the first emission area EA1 and the second emission area EA2, the pixel electrode 171, the emissive layer 172, and the common electrode 173 are stacked on one another sequentially so that holes from the pixel electrode 171 and electrons from the common electrode 173 are recombined with each other in the emissive layer 172 to emit light.

The emissive layer 172 may be disposed on the pixel electrode 171 and the bank 190. The emissive layer 172 may include an organic material to emit light of a certain color. For example, the emissive layer 172 may include a hole transporting layer, an organic material layer, and an electron transporting layer.

The common electrode 173 may be disposed on the emissive layer 172. The common electrode 173 may be disposed to cover the emissive layer 172. The common electrode 173 may be a common layer formed commonly (or entirely) across the first emission area EA1 and the second emission area EA2. A capping layer may be formed on the common electrode 173.

In the top-emission organic light-emitting diode, the common electrode 173 may be formed of a transparent conductive material (TCP), such as ITO and IZO that can transmit light, or a semi-transmissive conductive material, such as magnesium (Mg), silver (Ag), and an alloy of magnesium (Mg) and silver (Ag). When the common electrode 173 is formed of a semi-transmissive metal material, the light extraction efficiency can be increased by using microcavities.

A spacer 191 may be disposed on the bank 190. The spacer 191 may support a mask during a process of fabricating the emission layer 172. The spacer 191 may be formed of an organic layer, such as an acryl resin, an epoxy resin, a phenolic resin, a polyamide resin, and a polyimide resin.

A capping layer CAP may be disposed on the common electrode 173. The capping layer CAP can prevent impurities, such as moisture and air, from being introduced from the outside to damage or contaminate the emissive layer 172.

The encapsulation layer TFEL may be disposed on the capping layer CPL. The encapsulation layer TFEL includes at least one inorganic film to prevent permeation of oxygen or moisture into the emission material layer EML. In addition, the encapsulation layer TFEL includes at least one organic layer to protect the light-emitting element layer EML from foreign substances, such as dust. For example, the encapsulation layer TFEL includes a first inorganic encapsulation film TFE1, an organic encapsulation film TFE2, and a second inorganic encapsulation layer TFE3.

The first inorganic encapsulation film TFE1 may be disposed on the common electrode 173, the organic encapsulation film TFE2 may be disposed on the first inorganic encapsulation film TFE1, and the second inorganic encapsulation film TFE3 may be disposed on the organic encapsulation film TFE2. The first inorganic encapsulation film TFE1 and the second inorganic encapsulation film TFE3 may be made of multiple layers in which one or more inorganic layers of a silicon nitride layer, a silicon oxynitride layer, a silicon oxide layer, a titanium oxide layer, and an aluminum oxide layer are alternately stacked on one another. The organic encapsulation film TFE2 may be an organic film, such as an acryl resin, an epoxy resin, a phenolic resin, a polyamide resin, a polyimide resin, etc.

A touch detecting layer TDL may be disposed on the encapsulation layer TFEL. The touch detecting layer TDL includes a first touch insulating film TINS1, connection electrodes BE, a second touch insulating film TINS2, the driving electrodes TE, the sensing electrodes RE, and a third touch insulating film TINS3.

The first touch insulating film TINS1 may be disposed on the encapsulation layer TFEL. The first touch insulating film TINS1 may be formed of an inorganic film, for example, a silicon nitride layer, a silicon oxynitride layer, a silicon oxide layer, a titanium oxide layer, or an aluminum oxide layer.

The connection electrode BE may be disposed on the first touch insulating film TINS1. The connection electrode BE may be made of a single layer or multiple layers of one of molybdenum (Mo), aluminum (Al), chromium (Cr), gold (Au), titanium (Ti), nickel (Ni), neodymium (Nd), and copper (Cu) or an alloy thereof.

The second touch insulating film TINS2 is disposed over the connection electrodes BE. The second touch insulating layer TINS2 may be formed of an inorganic layer, for example, a silicon nitride layer, a silicon oxynitride layer, a silicon oxide layer, a titanium oxide layer, or an aluminum oxide layer. The second touch insulating layer TINS2 may be formed of an organic layer, such as an acryl resin, an epoxy resin, a phenolic resin, a polyamide resin, and a polyimide resin.

The driving electrodes TE and the sensing electrodes RE may be disposed on the second touch insulating film TINS2. The driving electrodes TE and the sensing electrodes RE may be made of a single layer or multiple layers of one of molybdenum (Mo), aluminum (Al), chromium (Cr), gold (Au), titanium (Ti), nickel (Ni), neodymium (Nd), and copper (Cu) or an alloy thereof.

The driving electrodes TE and the sensing electrodes RE may overlap with the connection electrodes BE in the third direction DR3. The driving electrodes TE may be connected to the connection electrodes BE through touch contact holes TCNT1 penetrating through the first touch insulating film TINS1.

The third touch insulating film TINS3 is formed over the driving electrodes TE and the sensing electrodes RE. The third touch insulating layer TINS3 may provide a flat surface over the driving electrodes TE, the sensing electrodes RE, and the connection electrodes BE, which have different heights. The third touch insulating film TINS3 may be formed of an organic layer, such as an acryl resin, an epoxy resin, a phenolic resin, a polyamide resin, and a polyimide resin.

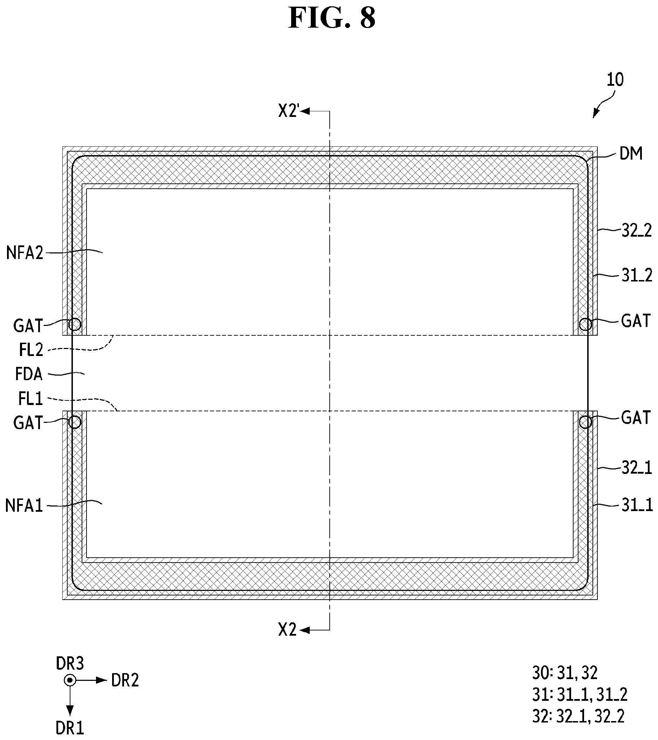

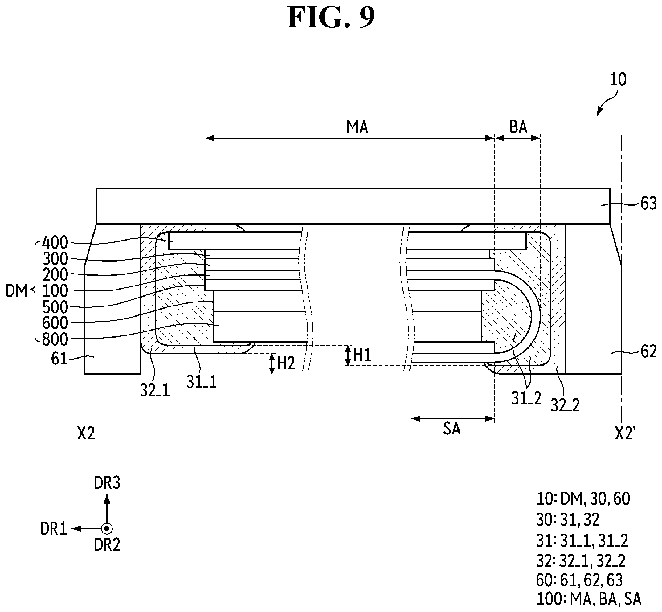

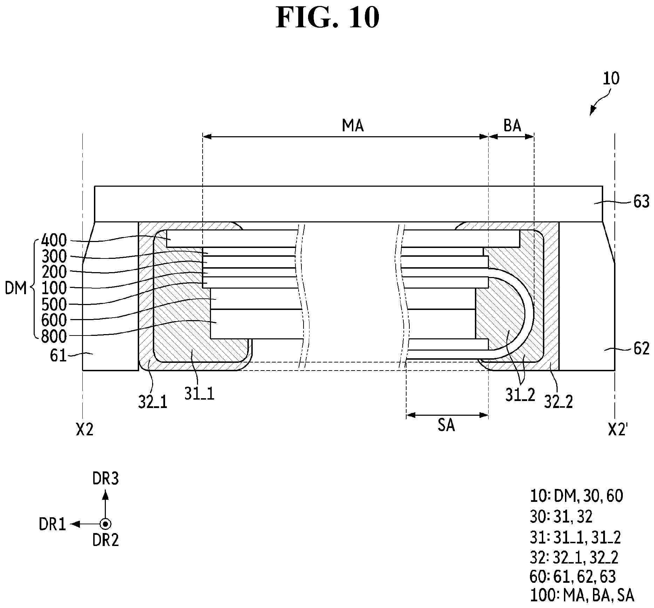

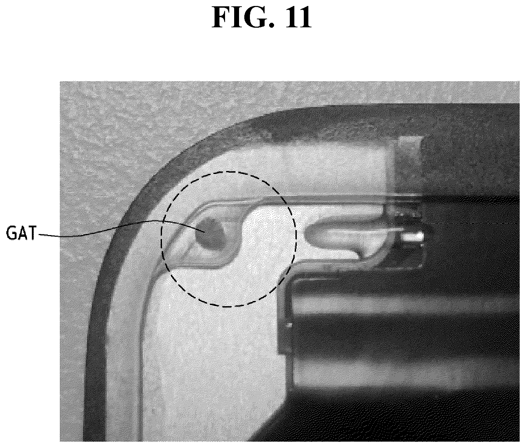

FIG. 8 is a view of a rear side of a display device. FIG. 9 is a cross-sectional view of the display device taken along the line X2 - X2' in FIG. 8. FIG. 10 is a cross-sectional view of a display device taken along the line X2 - X2' in FIG. 8 according to another example. FIG. 11 is an image showing a gate residue mark of a display.

Referring to FIGS. 8 to 10 in conjunction with FIG. 3, a display device 10 may include a display module DM, an outer structure 30 surrounding the display module DM, and a housing 60 surrounding the display module DM and the outer structure 30.

The display module DM may include a display panel 100, a polarizing film 200, a window 300, a protective film 400, a panel bottom member 500, a panel support member 600, and a digitizer 800. Although the heat dissipation member 700 (see, e.g., FIG. 5) is not depicted in the drawings, the heat dissipation member 700 may be further included in the display module DM.

The display panel 100, the polarizing film 200, the window 300, the protective film 400, the panel bottom member 500, the panel support member 600, the heat dissipation member 700, and the digitizer 800 have been described above and, thus, will not be described again.

The display module DM may have a main area MA, a bending area BA, and a subsidiary area SA. The bending area BA may be located between the main area MA and the subsidiary area SA. The main area MA may be located on one side of the bending area BA, and the subsidiary area SA may be located on the other side of the bending area BA.

The display area DA of the display panel 100 may be disposed in the main area MA. The edges of the main area MA around the display area DA, the entire bending area BA, and the entire subsidiary area SA may be the non-display area NDA. It is, however, to be understood that the present disclosure is not limited thereto. The bending area BA and/or the subsidiary area SA may also include the display area DA.

The bending area BA may be connected to the main area MA. The bending area BA may be a part of the display panel 100 that is bendable. As shown in FIG. 9, in the bending area BA, the display panel 100 may be bent with a curvature toward the lower side in the thickness direction.

Although the bending area BA may have a constant radius of curvature, it is not limited thereto. It may have different radii of curvature at different sections. As the display panel 100 is bent at the bending area BA, the surface of the display panel 100 may be reversed.

The subsidiary area SA may be connected to the bending area BA. The subsidiary area SA may be extended from the bending area BA. The size of the subsidiary area SA may be smaller than the size of the main area MA of the display panel 100. As shown in FIG. 9, when the display panel 100 is bent, the subsidiary area SA may overlap with the main area MA in the thickness direction of the display panel 100, that is, the third direction DR3. When the display panel 100 is bent, the subsidiary area SA may be disposed below the main area MA in the third direction DR3.

The housing 60 may surround the display module DM and the outer structure 30. The housing 60 may provide space for accommodating the display module DM and the outer structure 30. The housing 60 may have a first side wall 61, a second side wall 62, and a cover window 63.

The first side wall 61 and the second side wall 62 may be disposed on the outer side of the display module DM and the outer structure 30. The first side wall 61 and the second side wall 62 are separate from each other in the cross-section shown in FIG. 9, but are not limited thereto. For example, the first side wall 61 and the second side wall 62 may be a single side wall that is physically a single piece and surrounds the display module DM and the outer structure 30.

The cover window 63 may be disposed above the display module DM to protect the display module DM. The cover window 63 may transmit light output from the display module DM. The cover window 63 may include a light-blocking portion to block a part of the light output from the display module DM.

The cover window 63 may be made of a transparent plastic material, a glass material, or a reinforced glass material. The cover window 63 may be one of sapphire glass and Gorilla glass (a trademark of Corning Incorporated) (a chemically strengthened alkali-aluminosilicate glass), or a stack structure thereof. The cover window 63 may include one of PET (polyethylene terephthalate), PC (polycarbonate), PES (polyethersulfone), PEN (polyethylene naphthalate), and PNB (polynorbornene). The cover window 63 may be made of reinforced glass for scratch resistance and transparency.

The cover window 63 may be attached to the display module DM or the outer structure 30 via a separate adhesive member. For example, as shown in FIG. 9, the cover window 63 may be attached to a second outer layer 32 of the outer structure 30, to be described later. The size of the cover window 63 may be larger than the size of the display module DM and the size of the outer structure 30. Accordingly, the cover window 63 may protrude outwardly from the display module DM and the outer structure 30.

In the display device 10, because the outer structure 30 is disposed in a space defined by the outer surface of the display module DM, the lower surface of the cover window 63, the inner surface of the first side wall 61 and the inner surface of the second side wall 62, a sufficient surface for attaching a coupling member between the housing 60 and the outer structure 30 is ensured. As a result, the attachment tolerance for coupling the display module DM with the housing 60 can be reduced. Therefore, dead space between the display module DM and the housing 60 can be reduced.

The outer structure 30 may surround at least a part of the display module DM. For example, as shown in FIG. 8, the outer structure 30 may be disposed on the non-folding area NFA1 and NFA2 of the display device 10 to surround the non-folding area NFA1 and NFA2. The outer structure 30 may not be disposed on the folding area FDA of the display device 10.

As shown in FIG. 9, the outer structure 30 may be disposed generally on the side surfaces of the display module DM. The outer structure 30 may surround and cover the side surfaces of the display module DM.

The outer structure 30 may be disposed on the inner side of the first side wall 61 and the second side wall 62 of the housing 60. For example, the outer surfaces of the outer structure 30 may be in contact with the inner surface of the first side wall 61 and the inner surface of the second side wall 62. As used herein, the expression "contact" encompasses indirect contact through an adhesive member. For example, although no adhesive member is shown in the drawings, an adhesive member may be further included at the contact surface between the outer structure 30 and the housing 60.

The outer structure 30 may have a first outer layer 31 adjacent to the display module DM and a second outer layer 32 disposed on the outer side of the first outer layer 31.

The first outer layer 31 may be disposed on the outer side of the display module DM. The inner surface of the first outer layer 31 may be in direct contact with the outer surface of the display module DM. The outer surface of the first outer layer 31 may be in direct contact with the inner surface of the second outer layer 32.

The second outer layer 32 may be disposed on the outer side of the first outer layer 31. The inner surface of the second outer layer 32 may be in direct contact with the outer surface of the first outer layer 31. The outer surface of the second outer layer 32 may be in direct contact with the inner surface of the first side wall 61 and the inner surface of the second side wall 62.

Each of the first outer layer 31 and the second outer layer 32 may include a resin. The first outer layer 31 and the second outer layer 32 have different Young's moduli. For example, the Young's modulus of the first outer layer 31 may be smaller than the Young's modulus of the second outer layer 32. The Young's modulus of the first outer layer 31 measured at -20°C may be equal to or less than approximately 100 MPa, and the Young's modulus of the second outer layer 32 measured at room temperature (e.g., 25°C) may be equal to or greater than approximately 100 MPa. The moduli of the first outer layer 31 and the second outer layer 32 increase as the temperature decreases, but the modulus of the second outer layer 32 measured at a higher temperature may be greater than the modulus of the first outer layer 31 measured at a lower temperature.

In the display device 10, because the first outer layer 31 has a relatively low modulus, an impact caused by the slipping of the display module DM when the display device 10 is folded can be mitigated. In addition, because the second outer layer 32 has a higher modulus, the display device 10 can be protected from external impact, thereby improving durability.

As described above, when the outer structure 30 is not disposed on the folding area FDA, each of the first outer layer 31 and the second outer layer 32 may include two sub-outer layers spaced apart from each other. For example, the first outer layer 31 may include a first sub-outer layer 31_1 and a second sub-outer layer 31_2 that are spaced apart from each other with the folding area FDA therebetween, and the second outer layer 32 may include a third sub-outer layer 32_1 and a fourth sub-outer layer 32_2 that are spaced apart from each other with the folding area FDA therebetween.

The first to fourth sub-outer layers 31_1, 31_2, 32_1, and 32_2 may be disposed on the non-folding areas NFA1 and NFA2. For example, the first sub-outer layer 31_1 and the third sub-outer layer 32_1 may be disposed on the first non-folding area NFA1, and the second sub-outer layer 31_2 and the fourth sub-outer layer 32_2 may be disposed on the second non-folding area NFA2. The first to fourth sub-outer layers 31_1, 31_2, 32_1, and 32_2 may each have a U-shape, but the present disclosure is not limited thereto.

As shown in FIG. 9, the height of the lower surface of the first sub-outer layer 31_1 may be larger than the height of the lower surface of the second sub-outer layer 31_2 by a first distance H1 in the third direction DR3, and the height of the lower surface of the third sub-outer layer 32_1 may be larger than the height of the lower surface of the fourth sub-outer layer 32_2 by a second distance H2 in the third direction DR3. For example, the second sub-outer layer 31_2 and the fourth sub-outer layer 32_2 may overlap with the bending area BA and the subsidiary area SA, and accordingly, the lower surfaces of the second sub-outer layer 31_2 and the fourth sub-outer layer 32_2 may be lower than the lower surfaces of the first sub-outer layer 31_1 and the third sub-outer layer 32_1 by the thickness of the display panel 100 and the panel bottom member 500 located on the subsidiary area SA.

It should be understood, however, that the arrangement is not limited thereto. As shown in FIG. 10, the height of the lower surface of the first sub-outer layer 31_1 may be equal to the height of the lower surface of the second sub-outer layer 31_2, and the height of the lower surface of the third sub-outer layer 32_1 may be equal to the height of the lower surface of the fourth sub-outer layer 32_2 in the third direction DR3.

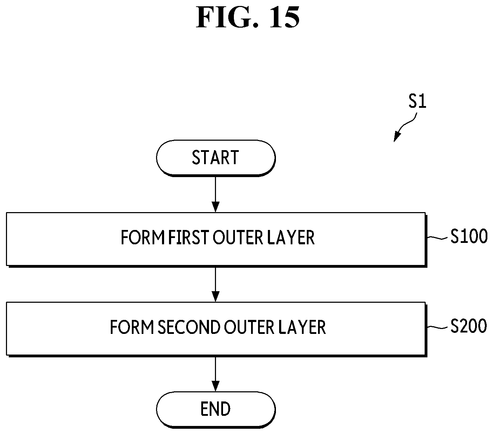

Incidentally, as shown in FIGS. 8 and 11, the outer structure 30 may have removal marks GAT. A removal mark GAT may be a trace left after a tip has been removed, which is formed at an inlet through which a material for forming the outer structure 30 (e.g., paste) is injected or an outlet through which the material is discharged in a method S1 for fabricating a display device described below (see, e.g., FIG. 15).

The removal marks GAT may have a shape that protrudes inwardly toward (or into) the display module DM (e.g., in the lower right diagonal direction of FIG. 11). Although the removal marks GAT are adjacent to the boundaries between the folding area FDA and the non-folding areas NFA1 and NFA2 in FIG. 8, the present disclosure is not limited thereto. As an example, the removal marks GAT may be located at the lower side of the first non-folding area NFA1 or the upper side of the second non-folding area NFA2. As another example, the removal marks GAT may be located at the left and right sides of the first non-folding area NFA1 and the second non-folding area NFA2.

In other instances, the removal marks GAT may have a protruding or recessed shape in the third direction DR3 from the upper surface of the first outer layer 31 and the upper surface of the second outer layer 32 in cross-sectional views.

Hereinafter, display devices according to other embodiments will be described. In the following description, the same or similar elements will be denoted by the same or similar reference numerals and redundant descriptions will be omitted or only briefly described.

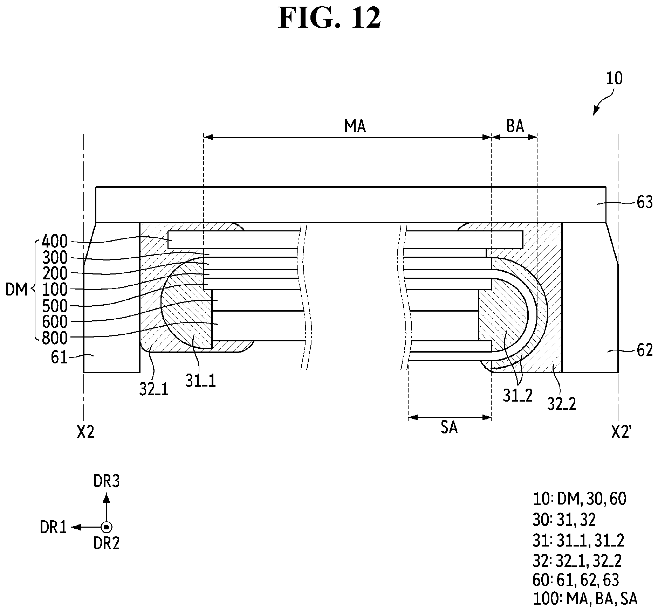

FIG. 12 is a cross-sectional view showing a display device according to another implementation.

A display device 10 as shown in FIG. 12 is different from the display device 10 shown in FIG. 9 and the like in that a first outer layer 31 has a different shape.

More specifically, the outer surface of the first outer layer 31 of the display device 10 may have a curved shape. For example, the outer surface of the first outer layer 31 in contact with the second outer layer 32 may be curved. The first outer layer 31 may have a semicircular shape in a cross-sectional view. The first sub-outer layer 31_1 and the second sub-outer layer 31_2 may each have a semicircular shape in a cross-sectional view.

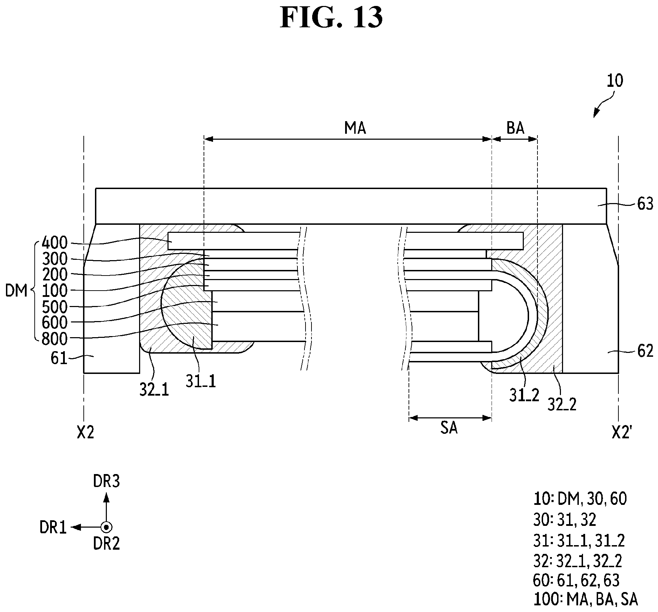

FIG. 13 is a cross-sectional view of a display device according to another implementation.

A display device 10 as shown in FIG. 13 is different from the display devices described above with reference to FIGS. 9, 12 and the like in that a first outer layer 31 is not disposed on the lower surface of the display panel 100 in the bending area BA.

More specifically, the first outer layer 31 may not be disposed on the lower surface of the display panel 100. For example, the first outer layer 31 may not be disposed in a space formed due to the bending of the display panel 100 in the bending area BA, which is located between the lower surface of the display panel 100 and the side surfaces of the panel bottom member 500, the panel support member 600 and the digitizer 800. Instead, an air gap may be formed in the space. Accordingly, impact caused by slipping of the display module DM when the display device 10 is folded can be mitigated. In addition, the durability against external impact can be improved because the impact is mitigated by the air gap.

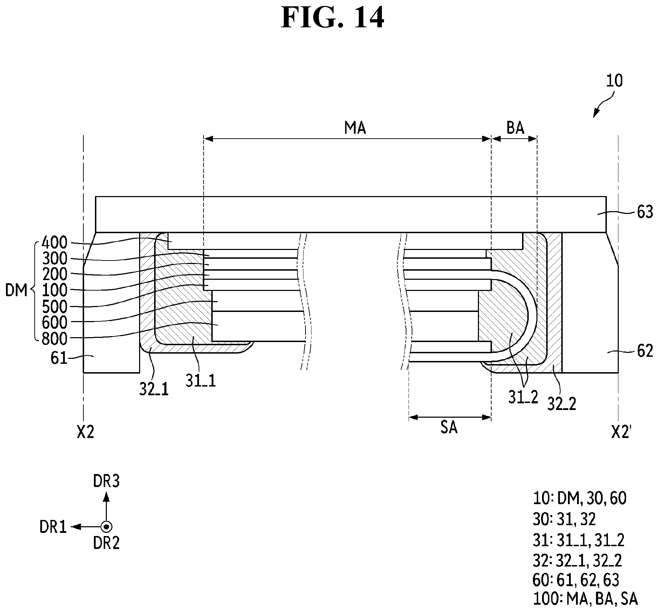

FIG. 14 is a cross-sectional view of a display device according to another implementation.

The example of FIG. 14 is different from the examples shown in FIGS. 9, 12, 13 and the like in that a cover window 63 is in direct contact with a display module DM.

More specifically, the outer structure 30 of the display device 10 may not be disposed on the upper surface of the display module DM. Accordingly, the lower surface of the cover window 63 may be in direct contact with the upper surface of the display module DM. In this manner, the thickness of the display device 10 in the third direction DR3 can be reduced.

Hereinafter, a method of fabricating a display device will be described.

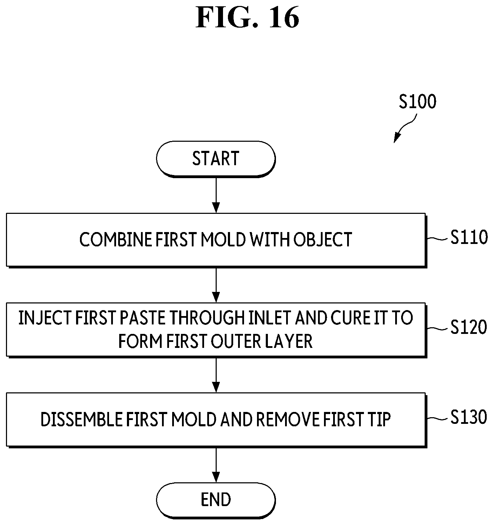

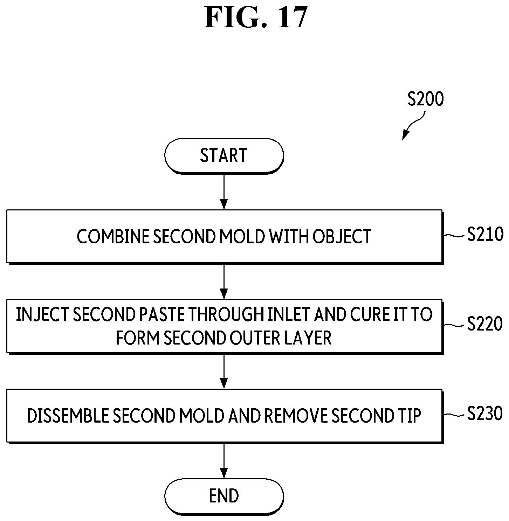

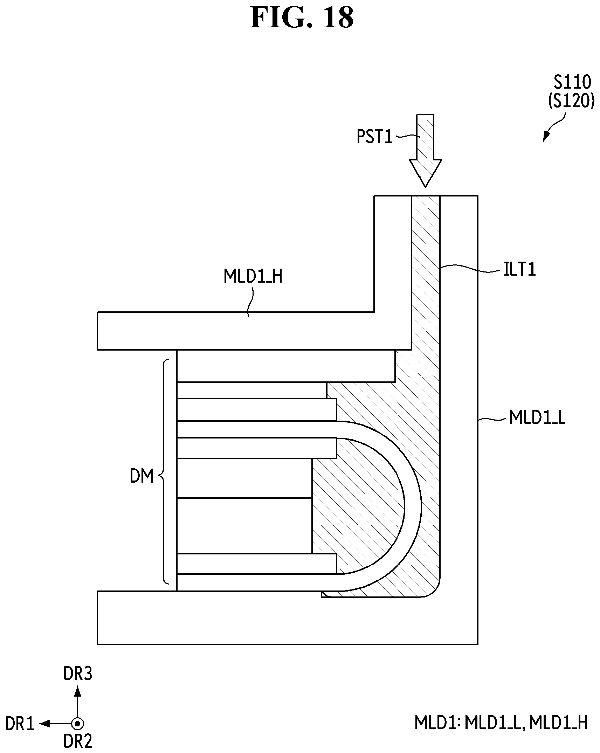

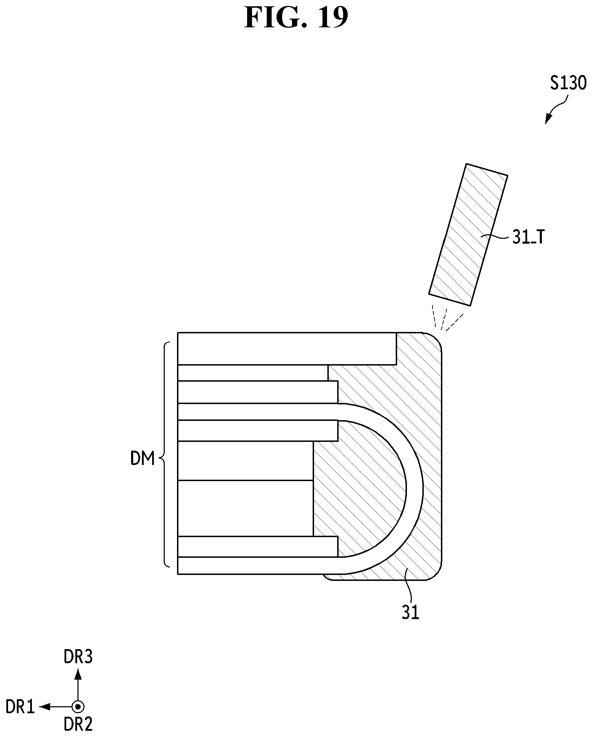

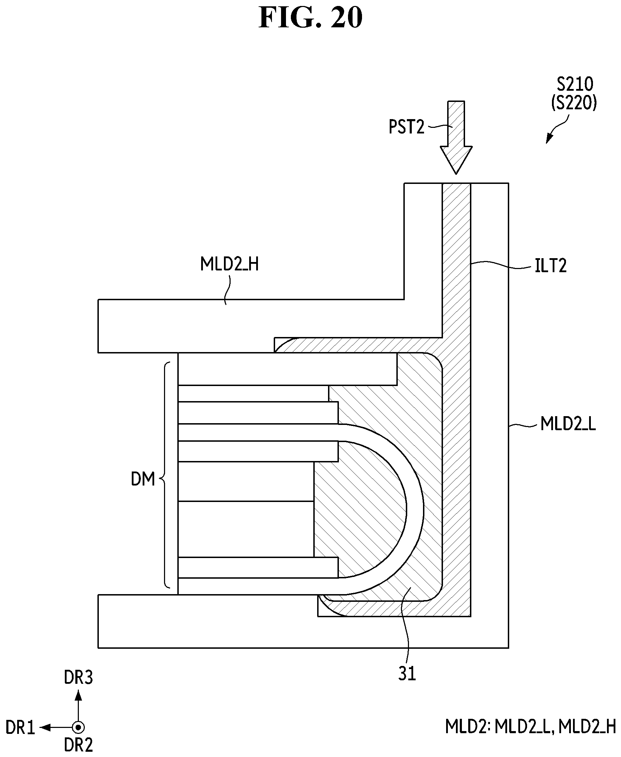

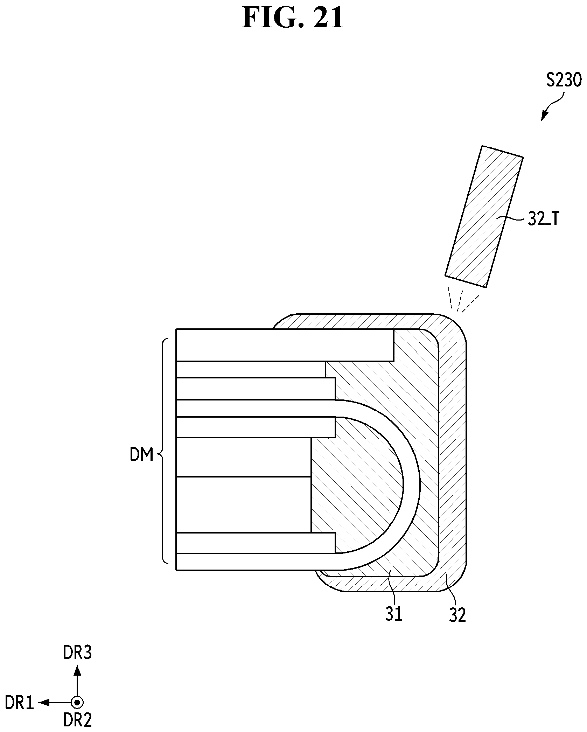

FIG. 15 is a flowchart describing steps of a method of fabricating a display device. FIG. 16 is a flowchart describing step S100 of FIG. 15. FIG. 17 is a flowchart for describing step S200 of FIG. 15. FIG. 18 is a cross-sectional view illustrating steps S110 and S120 of FIG. 16. FIG. 19 is a cross-sectional view illustrating step S130 of FIG. 16. FIG. 20 is a cross-sectional view illustrating steps S220 and S220 of FIG. 17. FIG. 21 is a cross-sectional view illustrating step S230 of FIG. 17.

Referring to FIGS. 15 to 21, a method S1 for fabricating a display device may include forming a first outer layer (step S100) and forming a second outer layer (step S200).

The forming the first outer layer S100 may include combining a first mold with an object (step S110), injecting a first paste through an inlet and curing it to form the first outer layer (step S120), and disassembling the first mold and removing a first tip of the object (step S130).

The forming the second outer layer S200 may include combining a second mold with an object (step S210), injecting a second paste through an inlet and curing it to form the second outer layer (step S220), and disassembling the second mold and removing a second tip of the object (step S230).

As shown in FIG. 18, in the combining the first mold with the object S110, the first mold MLD1 and the object (e.g., the display module DM) may be prepared.

The first mold MLD1 may include a first lower mold MLD1_L and a first upper mold MLD1_H. The object (e.g., the display module DM) may be interposed between the first lower mold MLD1_L and the first upper mold MLD1_H. When the first mold MLD1 and the object are combined, the object may be completely sealed by the first mold MLD1.

As shown in FIG. 18, in the injecting the first paste through the inlet and curing it to form the first outer layer S120, the first mold MLD1 may include a first inlet ILT1. The first inlet ILT1 is a passage through which the first paste PST1 for forming the outer structure 30 (see, e.g., FIG. 8) is injected. The first inlet ILT1 may be formed by combining (e.g., may be formed between) the first lower mold MLD1_L with the first upper mold MLD1_H. The first inlet ILT1 may have a shape extended in the third direction DR3.

The first mold MLD1 may further include a first outlet. The first outlet is a passage through which the first paste PST1 injected through the first inlet ILT1 is discharged. Similar to the first inlet ILT1, the first outlet may be formed by combining the first lower mold MLD1_L with the first upper mold MLD1_H. Similar to the first inlet ILT1, the first outlet may have a shape extended in the third direction DR3.

The first paste PST1 may include a resin. The first paste PST1 may include a resin in liquid form. For example, the first paste PST1 may include, but is not limited to, an optically clear resin in liquid form.

The first paste PST1 may be injected into a cavity formed between the object and the first mold MLD1. The cavity may be filled with the first paste PST1 such that the amount of the first paste PST1 exceeds the volume of the cavity. When this happens, the excess amount of the first paste PST1 may be discharged through the first outlet.

After the first paste PST1 has been injected through the first inlet ILT1, the first paste PST1 may be cured. The first paste PST1 may be cured by natural curing, thermal curing, and light curing (e.g., ultraviolet curing or visible light curing).

The excess amount of the first paste PST1 may remain at the first inlet ILT1 and the first outlet. The excess amount of the first paste PST1 remaining at the first inlet ILT1 and the first outlet may form a first tip 31_T.

As shown in FIG. 19, in the dissembling the first mold and removing the first tip of the object S130, the first lower mold MLD1_L, the display module DM with the first outer layer 31 as the object, and the first upper mold MLD1_H may be dissembled and separated from one another. The first tip 31_T located on the first outer layer 31 may be removed by using a separate cutting device. The object separated from the first mold MLD1 may be received into a separate space for further processing.

As shown in FIG. 20, in the combining the second mold with the object S210, the second mold MLD2 and the object (e.g., the display module DM with the first outer layer 31) may be prepared.

The second mold MLD2 may include a second lower mold MLD2_L and a second upper mold MLD2_H. The display module DM combined with the first outer layer 31, which is the object, may be interposed between the second lower mold MLD2_L and the second upper mold MLD2_H. When the second mold MLD2 and the object are combined, the object may be completely sealed by the second mold MLD2.

As shown in FIG. 20, in the injecting the second paste through the inlet and curing it to form the second outer layer S220, the second mold MLD2 may include a second inlet ILT2. The second inlet ILT2 is a passage through which the second paste PST2 for forming the outer structure 30 (see, e.g., FIG. 8) is injected. The second inlet ILT2 may be formed by combining the second lower mold MLD2_L with the second upper mold MLD2_H. The second inlet ILT2 may have a shape extended in the third direction DR3.

The second mold MLD2 may further include a second outlet. The second outlet is a passage through which the second paste PST2 injected through the second inlet ILT2 is discharged. Similar to the second inlet ILT2, the second outlet may be formed by combining the second lower mold MLD2_L with the second upper mold MLD2_H. Similar to the second inlet ILT2, the second outlet may have a shape extended in the third direction DR3.

The second paste PST2 may include a resin. The second paste PST2 may include a resin in liquid form. For example, the second paste PST2 may include, but is not limited to, an optically clear resin in liquid form.

The type or content ratio of the composition included in the second paste PST2 may be different from the type or content ratio of the composition included in the first paste PST1. For example, the second paste PST2 may contain a different material from the first paste PST1, or the second paste PST2 may contain the same material as the first paste PST1 but may have a different content ratio. For example, to make the Young's modulus of the second outer layer 32 formed by the second paste PST2 greater than the Young's modulus of the first outer layer 31 formed by the first paste PST1, the second paste PST2 may further include at least one of a filler, an additive, and a curing agent or may have a larger amount of one component than the first paste PST1.

The second paste PST2 may be injected into a cavity formed between the object and the second mold MLD2. The cavity may be filled with the second paste PST2 such that the amount of the second paste PST2 exceeds the volume of the cavity. When this happens, the excess amount of the second paste PST2 may be discharged through the second outlet.

After the second paste PST2 has been injected through the second inlet ILT2, the second paste PST2 may be cured. The second paste PST2 may be cured by natural curing, thermal curing, and light curing (e.g., ultraviolet curing or visible light curing).

The excess amount of the second paste PST2 may remain at the second inlet ILT2 and the second outlet. The excess amount of the second paste PST2 remaining at the second inlet ILT2 and the second outlet may form a second tip 32_T.

As shown in FIG. 21, in the dissembling the second mold and removing the second tip of the object S230, the second lower mold MLD2_L, the display module DM with the first outer layer 31 and the second outer layer 32 as the object, and the second upper mold MLD2_H may be dissembled and separated from one another. The second tip 32_T located on the second outer layer 32 may be removed by using a separate cutting device.

In concluding the detailed description, those skilled in the art will appreciate that many variations and modifications can be made to the embodiments described herein without substantially departing from the invention as defined in the claims. Therefore, the disclosed embodiments of the present disclosure are to be understood in a generic and descriptive sense and not for purposes of limitation.

## Claims

1. A display device comprising:
a display module comprising:
a display panel having a folding area and a non-folding area at a side of the folding area;
an upper module on an upper side of the display panel; and
a lower module on a lower side of the display panel; and
an outer structure surrounding the display module, the outer structure comprising:
a first outer layer adjacent to the display module; and
a second outer layer on an outer side of the first outer layer,
wherein the Young's modulus of the first outer layer is smaller than the Young's modulus of the second outer layer.

2. The display device of claim 1, wherein the Young's modulus of the first outer layer is equal to or less than 100 MPa at -20°C.

3. The display device of claim 1, wherein the Young's modulus of the second outer layer is equal to or greater than 100 MPa at 25°C.

4. The display device of any one of the preceding claims, wherein the outer structure comprises a resin.

5. The display device of any one of the preceding claims, wherein the outer structure is in the non-folding area and is not in the folding area.

6. The display device of claim 5, wherein the first outer layer comprises a first sub-outer layer and a second sub-outer layer spaced apart from the first sub-outer layer with the folding area therebetween, and
wherein the second outer layer comprises a third sub-outer layer and a fourth sub-outer layer spaced apart from the third sub-outer layer with the folding area therebetween.

7. The display device of any one of the preceding claims, wherein the first outer layer is in direct contact with a side surface of the display module.

8. The display device of any one of the preceding claims, wherein the display panel has a bending area, and
the first outer layer is not in the bending area on a lower surface of the display panel.

9. The display device of any one of the preceding claims, further comprising a cover window on the display module,
wherein the cover window is on the second outer layer.

10. The display device of any one of the preceding claims, further comprising a housing surrounding the display module and the outer structure,
wherein the outer structure is between the display module and the housing.

11. The display device of any one of claims 1 to 8, further comprising a cover window on the display module,
wherein a lower surface of the cover window is in contact with an upper surface of the display module.

12. The display device of claim 11, wherein the outer structure is not on the upper surface of the display module.

13. The display device of any one of the preceding claims, wherein the outer structure further comprises a removal mark on the first outer layer or the second outer layer, wherein the removal mark has a protruding or recessed shape from an upper surface of the first outer layer or an upper surface of the second outer layer.

14. A method for fabricating a display device according to any one of the preceding claims, the method comprising:
combining a first mold with a display module;
injecting a first paste through a first inlet and cutting it to form a first outer layer;
disassembling the first mold and removing a first tip of the first outer layer;
combining a second mold with the display module having the first outer layer formed thereon;
injecting a second paste through a second inlet and curing it to form a second outer layer; and
disassembling the second mold and removing a second tip of the second outer layer.

15. The method of claim 14, wherein a type or content ratio of a composition of the second paste is different than a type or content ratio of a composition of the first paste, wherein the second paste optionally further comprises at least one of a filler, an additive, and a curing agent or has a larger amount of a component than the first paste.
